(19) Europäisches Patentamt

European Patent Office

Office européen des brevets

(11) Publication number: **0 221 489 B1**

# EUROPEAN PATENT SPECIFICATION

(45) Date of publication of patent specification: **28.04.93**

(51) Int. Cl.5: **A23B 7/00**, A23B 7/06, A23B 7/148

(21) Application number: **86114897.1**

(22) Date of filing: **27.10.86**

(54) **Prolonging the shelf life of fresh root vegetables.**

(30) Priority: **29.10.85 US 792440**

(43) Date of publication of application:
**13.05.87 Bulletin 87/20**

(45) Publication of the grant of the patent:
**28.04.93 Bulletin 93/17**

(84) Designated Contracting States:
**AT BE CH DE ES FR GB GR IT LI LU NL SE**

(56) References cited:
| | |
|---|---|
| EP-A- 0 021 629 | EP-A- 0 074 897 |
| CH-A- 501 197 | FR-A- 540 867 |
| FR-A- 2 218 056 | GB-A- 1 441 072 |
| US-A- 1 450 866 | US-A- 4 001 443 |

(73) Proprietor: **FreshWorld, L.P.**
**70 W. Oakland Avenue**
**Doylestown, PA 18901(US)**

(72) Inventor: **Orr, Avigdor**
**337 Felton Avenue**
**Highland Park New Jersey(US)**
Inventor: **Spingler, John O.**
**3713 Ouail Ridge Drive**
**Plainsboro New Jersey(US)**
Inventor: **Gilbert, Seymour G.**
**76 North Ross Hall Blvd**
**Piscataway New Jersey(US)**

(74) Representative: **Patentanwälte Grünecker,**
**Kinkeldey, Stockmair & Partner**
**Maximilianstrasse 58**
**W-8000 München 22 (DE)**

EP 0 221 489 B1

**Description**

This invention relates to a process for prolonging the shelf life of fresh vegetables and to a fresh peeled carrot having a prolonged storage life. More particularly, it relates to prolonging the shelf life of fresh root crops. This invention especially relates to prolonging the shelf life of carrots by a variety of processes each of which may include one or more of the following operations: a hot water treatment, a cooling step, exposure to vacuum, a coating operation, and a packaging operation.

Fresh fruits and vegetables are extremely perishable commodities. Heretofore many techniques have been employed to protect such food products from oxidative degradation, mold attack and moisture change and to preserve the freshness, texture and color of the fresh produce. One of the earliest means of lengthening the shelf life of fruits and vegetables was refrigeration. However, most fresh produce when stored under reduced temperatures for prolonged periods shows adverse effects on the taste, odor or quality of the product from microbial and mold growth above 1.7°C (35°F). In addition, storage temperatures below 1.7°C (35°F). often show chill injury to the tissue of the produce. Hence, in many instances refrigeration alone is not effective in achieving the desired shelf life for a particular fruit or vegetable.

Coating fresh fruits and/or vegetables is another of these techniques which has been employed with varying degrees of success. Not only must the coating be effective in prolonging the useful shelf life of fresh product, but the appearance of the commodity must not be altered from that of its natural state. At a minimum, this natural appearance must not only remain unchanged but should ideally be enhanced especially when the fruit or vegetable will be displayed for sale. The selection of a coating material is further complicated where the fruit or vegetable is to be consumed in its natural state and it is considered essential that there be no need to remove the coating. In that event, the coating material must not only be edible, it should not affect or alter the natural organoleptic characteristics of the fresh fruit or vegetable.

Typical of these prior art coatings are the wax emulsions of U.S. Patents 2,560,820 of Recker and 2,703,760 of Cunning. Coatings of natural materials have been employed including milk whey (U.S. Patent 2,282,801 of Musher), lecithin (U.S. Patents 2,470,281 of Allingham and 3,451,826 of Mulder), gelatin together with polyhydric alcohol (U.S. Patent 3,556,814 of Whitman et al.) and protein (U.S. Patent 4,344,971 of Garbutt). Polymers have also been used extensively, viz., a thermoplastic polymer (U.S. Patent 2,213,557 of Tisdale et al.), vinyl acetate polymer (U.S. Patent 3,410,696 of Rosenfield), a hydrophilic polymer (U.S. Patent 3,669,691 of De Long et al.) and the combination of a water soluble polymer and hydrophobic material (U.S. Patent 3,997,674 of Ukai et al.). Cellulosic materials have found utility in coating fruits and vegetables including hydrated cellulose (U.S. Patent 1,774,866 of Beadle), a combination of cellulose and wax (U.S. Patent 2,364,614 of Beatty), cellulose ether in combination with a fatty acid ester (U.S. Patent 3,471,303 of Hamdy et al.) or monoglyceride and a fatty acid metal salt (U.S. Patent 3,461,304 of Hamdy et al.), or a sucrose ester of a fatty acid (U.S. Patent 4,338,342 of Tan et al.).

Food preservation has for many years employed such mutually exclusive processes as dehydration and freezing. Both of these operations often include a heat treatment, known as blanching, which is conducted prior to the dehydration or freezing step. Blanching is said to reduce enzyme or bacteria level and to prevent or minimize undesirable changes during storage in the dry or frozen state, such as changes in color, odor or texture or loss of vitamins. Blanching may be conducted with steam (e.g., U.S. Patent 2,373,521 of Wigelsworth), hot water (U.S. Patent 2,515,025 of Vahl et al.), hot oxygen-free gas (U.S. Patent 3,801,715 of Smith et al.) or hot air (U.S. Patent 3,973,047 of Linaberry et al.).

U.S. Patent 2,780,551 of Guadagni is also concerned with the preservation of raw fruits or vegetables by freezing. A heat pretreatment is employed here also, but it is a mild heat treatment to cause partial enzyme inactivation. The mild heat treatment may be conducted by immersing the food in a liquid which is heated to a temperature in the range of 66 to 100°C (150 to 212°F). for a period of from 10s at the higher temperatures to 10 min at the lower temperatures. The heat treatment is described as heating the food at a temperature and for a period of time sufficient to inactivate the enzymes throughout the food and not sufficient to sterilize or cook the food. The combination of mild heat treatment and freezing produces a product which will maintain its fresh color, taste and appearance after prolonged storage.

U.S. Patent 2,619,424 of Masure discloses a process for preparing dehydrated carrots having improved storage qualities. The carrots are dehydrated, then moistened with water, optionally containing starch, and then the carrots are dehydrated to a moisture level below 10%. The use of starch assists in preserving the color of the final product although the absorbed water is the primary factor in improving the stability of the color and the carotene content.

US-A-4001443 relates to a method for improving the shelf-life of cut leafy vegetables that, after treatment with an aqueous chlorine bath and drying, are enclosed in a sealed, evacuated package of a flexible sheet material having a very low gas and moisture permeability.

2

A one-step process for treating vegetables prior to canning is disclosed in FR-A-540867, wherein a vacuum is applied to vegetables submerged in lukewarm water, then broken in the presence of water followed by removing the vegetables for canning.

One embodiment of the present invention relates to a process of maintaining a fresh root vegetable in a viable form which comprises:

(a) peeling the surface of a fresh root vegetable,

(b) providing the vegetable in uniform sized pieces,

(c) subjecting the vegetable to a vacuum of less than 67,7 KPa (20 inches Hg absolute) for 2 to 10 min,

(d) breaking the vacuum in the presence of chlorinated water,

(e) removing surface water from the vegetable, and

(f) providing the vegetable in a sealed container effective to prevent microbial recontamination of the vegetable and having a gas permeability of from 50 to 300 ml of $0_2$/645 $cm^2$ (100 $in^2$) - atm -24 h and from 200 to 800 ml of $CO_2$/645 $cm^2$ (100 $in^2$)-atm - 24h and a ratio of the mass of vegetable to the container surface of 0.16 $g/cm^2$ (1$g/in^2$) to 0.93$g/cm^2$ (6$g/in^2$).

A second embodiment of the present invention relates to a process of maintaining a fresh root vegetable in viable form which comprises:

(a) peeling the surface of a fresh root vegetable,

(b) providing the vegetable in uniform sized pieces,

(c) contacting the vegetable with chlorinated cold water under atmospheric conditions for about five minutes,

(d) removing surface water from the vegetable, and

(e) providing the vegetable in a sealed container effective to prevent microbial recontamination of the vegetable and having a gas permeability of from 50 to 300 ml of $0_2$/645$cm^2$ (100 $in^2$) -atm -24 h and from 200 to 800 ml of $CO_2$/645 $cm^2$ (100 $in^2$) - atm - 24 h and a ratio of the mass of the vegetable to the container surface of 0.16 $g/cm^2$ (1$g/in^2$) to 0.93 $g/cm^2$ (6$g/in^2$), with the proviso that said vegetable is not subjected to heat treatment during said process.

In yet another embodiment the present invention provides a process of maintaining a fresh root vegetable in viable form which comprises:

(a) peeling the surface of a fresh root vegetable having endogenous microflora present therein,

(b) providing the vegetable in uniform sized pieces,

(c) subjecting the vegetable having endogenous microflora present therein to elevated temperature and time conditions effective to reduce the endogenous microflora concentration in colony forming units (CFU)/g by a factor greater than $10^2$ while maintaining the vegetable in a viable form and substantially maintaining the sensory qualities of color, taste and texture of the fresh root vegetable,

(d) rapidly cooling the heat treated vegetable to below 25°C in less than about two minutes,

(e) subjecting the vegetable to a vacuum of 3,4-67,7 KPa (1 inch to 12 inches Hg absolute) for 2 to 10 min,

(f) breaking the vacuum in the presence of water,

(g) removing the surface water from the vegetable, and

(h) providing the vegetable in a sealed container effective to prevent microbial recontamination of the vegetable and having a gas permeability of from 50 to 300 ml of $0_2$/645 $cm^2$ (100 $in^2$) -atm - 24 h and from 200 to 800 ml of $CO_2$/645$cm^2$ (100 $in^2$) - atm - 24 h and a ratio of the mass of the vegetable to the container surface of 0.16 $g/cm^2$ (1$g/in^2$) to 0.93 $g/cm^2$ (6$g/in^2$).

Finally, according to the present invention there is provided a fresh peeled carrot having a prolonged storage life of from 14 to 21 days at a temperature of 10°C.

According to the present invention carrots are prepared as a ready-to-eat raw snack food and provided in a package which may be stored for a period substantially longer than raw fresh carrots which have not been treated by the process of the present invention. Carrots provided in this fashion are ideal for use with party dips or for inclusion in a lunch box or a picnic basket since they require no preparation and can be served or eaten "right out of the package."

The basic purpose of the process of this invention involving a mild heat treatment is to reduce the endogenous microflora present in a raw fresh root vegetable while maintaining the vegetable in a viable form and without undue damage to the vegetable cell tissue so that when it is subsequently eaten, it will provide substantially the same sensory qualities of appearance, odor and taste as the freshly harvested raw vegetable. Without treatment in accordance with this invention, the growth of microflora in the fresh vegetable will in a short time adversely affect the organoleptic qualities of the vegetable even if stored under refrigeration. In those embodiments of this invention, which do not include a mild heat treatment, the treatment and/or the packaging of the fresh root vegetable which is employed minimizes the growth of microflora sufficiently to maintain the fresh quality of the vegetable. By practicing the process of the present invention, the useful shelf life of fresh carrots, for example, can be prolonged by 14 to 21 days at a 10°C storage temperature.

The mild heat treatment employed here is distinguishable from blanching, a well known operation used in the canning, dehydration and freezing of fruits and vegetables. Blanching employs hot water or steam to scald or parboil raw foodstuffs in order to inactivate enzymes which might otherwise cause deterioration, especially of flavor, during processing or Storage. In contra distinction, the mild heat treatment of the present invention reduces the microflora content on the surface of the fresh vegetable but does not stop the enzymatic action in the raw vegetable. If the enzymatic action were stopped, the vegetable would no longer be a fresh vegetable In fact, were blanching to be Substituted for the mild heat treatment step in the process of the present invention, the packaged product obtained would have such a poor storage stability that it would be unacceptable for sale to the consumer after only one week of refrigerated storage.

The vegetables which are particularly adapted to the process of the present invention are those which are known collectively as root vegetables or root crops, particularly those which are eaten in the raw state. These vegetables include carrots, turnips, rutabaga and radishes. Carrots are especially well suited to being treated in accordance with the present invention which will be explained below using carrots as the vegetable being processed. This is done for illustration purposes and although carrots are especially preferred when practicing this invention, other root crops, as explained above, may be employed.

In accordance with one embodiment of the present invention, the carrots are subjected to a mild heat treatment to substantially reduce the microflora content, then are rapidly cooled and finally are placed in a sealed container.

In most instances the carrots will be provided in condition whereby the consumer can eat the carrots without any preparation. Thus, before the carrots are shipped to the processing plant to be treated in accordance with the present invention, the harvested carrots should be topped to remove the green leafy top and washed to remove the soil from the exterior surface of the carrots. This can be performed in the field during harvesting or just prior to shipping to the processing and packaging plant. The preparation continues at the plant with peeling of the carrots which may be achieved by any of several known methods:

(a) steam peeling using a batch type peeler such as an Odenberg peeler, K & K Model 100 or an FMC continuous peeler,

(b) lye peeling using a peeler such as an A. K. Robins ferris wheel type employing a lye concentration of 5-20%, or

(c) mechanical peeling using an interchangeable roller type peeler such as a Magnason Model HL. The peels can be removed from the carrots by employing equipment such as an A. K. Robins drum washer or a Magnason Magnu washer with stud rubber and brush rolls.

Since the carrots are to be provided in a ready-to-eat form, the carrots should be of a small diameter variety which are cut to the desired length, usually 7.62-12.7 cm (3-5 inches). For larger diameter carrots, they should be cut to provide carrot sticks of 7.62-12.7 cm (3-5 inches) in length and a cross section of 0.64-1.27 cm by 0.64-1.27 cm (1/4 - 1/2 inch by 1/4 - 1/2 inch).

In the practice of this embodiment of the invention, the initial step is a mild heat treatment. The mild heat treatment must be conducted at a temperature and for a period of time which are effective to reduce the endogenous microflora without causing undue damage to carrot cell tissue which could affect the sensory qualities of a fresh, raw carrot. Excessive heat treatment causes the carrots to have a cooked appearance and taste and to suffer a loss of turgor, i.e., the ability to hold water. In contradistinction, insufficient heat treatment results in no appreciable and consistent reduction of microflora. To be effective, the treatment must cause a reduction of microflora count by a factor of at least $10^2$, preferably at least $10^4$. It is possible when practicing the heat treatment of this invention to reduce the microflora level to below 3 colony forming units (CFU) per gram of carrots. In one embodiment of the heat treatment, the carrots are immersed for 20 to 180s in water maintained at 45 to 55°C. Those skilled in the art can determine the optimum conditions for particular carrots without an undue amount of experimentation by evaluating the microflora count before and after a series of heat treatment screening tests. Not only must the heat treatment cause the required, reduction in microflora, but the carrots must maintain the organoleptic qualities of odor, appearance, taste and mouth feel evidenced by freshly harvested raw carrots.

The next step involves a rapid cooling of the heat treated carrots. The rapid cooling is necessary to minimize surface cell heat destruction and reduce respiration and other biochemical reactions which adversely affect color, odor, taste and texture. As the carrots are removed from the heat treating step, they are rapidly cooled to below 25°C, preferably below 15°C in less than 2 min. This cooling may be accomplished in various ways, e.g, including spraying the carrots with cold water, immersing them in cool water, and passing cold air over the carrots. Other cooling methods known in the art may also be used instead of or in conjunction with any of these cooling methods. In one preferred embodiment, the rapid cooling is achieved by immersing the carrots in cold water, preferably chlorinated (10-250 ppm, preferably 25-100 ppm).

The heat treated and cooled carrots are now ready for the final operation of packaging. The carrots are placed in a sealed package to prevent undue moisture loss as measured by texture and weight loss and to prevent microbial recontamination. The packaging material should have a gas permeability effective to permit sufficient respiration for maintaining the carrot tissue in a viable condition.

Typically, useful packaging materials have a gas permeability of 50 to 300, preferably 75 to 200 ml of $O_2$/645 cm$^2$ (100 in$^2$) - 1,01.10$^5$ Pa -(atm.)- 24 h and 200 to 800, preferably 400 to 600 ml of $CO_2$/645 cm$^2$ (100 in$^2$) - 24 hrs -90% R.H., 21°C (70°F) and a moisture transmission rate of less than 1.5, preferably less than 0.5 g/645 cm$^2$ (100 in$^2$) in 24 hrs at 90% RH, 21°C (70°F). Further, the ratio of product mass to package surface is in the range of 0.16 g/cm$^2$ (1) to 0.93 g/cm$^2$ (6 g/in$^2$). Packages can be made from flexible or semi-rigid materials in various shapes and forms including three sided pouches and thermoformed tubs to provide an attractive, eye-catching package. Foamed polypropylene has been found to be a useful packaging material in the practice of this invention.

For maximum shelf life, the packaged carrots should be maintained under refrigeration at a temperature of above 2 to below 15°C, preferably 2 to 4°C. Packaged carrots prepared in accordance with the process of this invention have a shelf life of 14 to 21 days longer than packaged carrots which have not been similarly processed.

Although the heat treating, cooling and packaging of the carrots in accordance with this embodiment significantly improves the shelf life of the fresh carrots, several other optional steps may be included in the process of this embodiment to further enhance the shelf life and/or the appearance of the carrots.

Thus, following the rapid cooling of the carrots by any of the methods described above, the carrots are subjected to a vacuum of less than 67,7 KPa (20 inches Hg absolute) preferably in the range of 3,4-40,6 KPa (1 to 12 inches Hg absolute), for two to ten minutes in the presence or absence of water, which may optionally be chlorinated (10-250 ppm, preferably 25-100 ppm). The vacuum should be broken in the presence of water, preferably chlorinated (10-250 ppm, preferably 25-100 ppm). This may be accomplished by having the carrots immersed in water or by spraying water over the carrots when the vacuum is broken. Ideally, this use of vacuum can be accomplished in conjunction with a vacuum cooling which is one of the preferred cooling techniques. Breaking the vacuum in the presence of water significantly improves the color of the carrot pieces in that the color looks brighter and deeper as compared to carrot pieces not so treated. This is thought to be caused by the removal of inter and intra cellular gases and replacing them with water. Employing chlorinated water here will provide an additional benefit in that the initial microflora will be further reduced, further prolonging shelf life. Breaking the vacuum with chlorinated water when used in combination with the hot water heat treatment provides a synergistic improvement.

Since the cooled carrots may contain surface water after they are cooled and, optionally, subjected to vacuum conditions, this water should be removed before the carrots are further processed. Any of several known techniques can be employed, such as for example, centrifuging or contacting with dry air at temperatures of 10 to 20°C.

In another optional embodiment the heat treated and cooled carrots may be provided with a coating before they are placed in the sealed protective package. This coating controls the state of water at the carrot's surface. It also acts as a partial barrier to oxygen and carbon dioxide exchange thus further slowing biochemical reactions and prolonging shelf life. Since, ideally, the coating will be consumed when the carrots are eaten, the coating material selected should not only be edible, it must not adversely affect the natural taste of raw carrots. Further, the coating material should enhance the surface appearance of the carrots when they are displayed for sale.

Previous studies have determined that microorganisms do not grow in an environment of restricted water availability and some consider that the partial pressure of the water vapor, in equilibrium with the growth media, such as a food product, is the criterion of the water availability. It now appears that this criterion is the thermodynamic state of the water rather than the equilibrium relative humidity. More specifically, the relative humidity is related to the average fugacity or escaping tendency of water. Bacteria, on the other hand, grow only in the presence of water molecules influenced by an outside force and associated with other water molecules, i.e., clustered water, rather than in the presence of water associated with a single polar bonding site on macromolecules, i.e., bound water. There is another type of water involved here, free water, which is water associated with other water molecules and not influenced by any other outside force. Thus, the moisture found in and around carrots can be of three types; clustered water, bound water or free water. The latter is not associated either directly or indirectly with macromolecules and is usually found in the vicinity of or on the surface of the carrots.

Macromolecules such as hydrocolloids are ideally suited for use as a coating material, provided they meet the organoleptic standards as well. Hydrocolloids such as microcrystalline cellulose or modified tapioca starch are particularly preferred. Typically coatings of these materials constitute 0.05 to 1.0 of the weight of the carrot. The hydrocolloid coating must be effective to substantially reduce the availability of clustered and free water at the surface of the carrots. The hydrocolloids can also slow down the permeation of oxygen from the environment into the carrot tissue and the permeation of carbon dioxide from the tissue into the surrounding environment.

Other embodiments of this invention provide effective control of the endogenous microflora present in fresh carrots without employing either the mild heat treatment or hydrocolloid coating described above. In one such embodiment, subjecting the fresh carrots to only one of the optional steps described above provides satisfactory control of the microflora growth and thus an extended shelf life. In this embodiment, fresh carrots are subjected to vacuum of less than 67,7KPa (20 inches Hg absolute)(i.e., a vacuum of less than 33,9KPa (10 inches Hg gauge), preferably in the range of 3,4-40,6KPa (1 to 12 inches Hg absolute), for about two to about ten minutes in the presence or absence of water which may optionally be chlorinated (10-250 ppm, preferably 25-100 ppm). The vacuum is then broken in the presence of water, which preferably is chlorinated (10-250 ppm, preferably 25-100 ppm), and finally the surface water is removed, all as described hereinbefore. Following this preparation the carrots are packaged in a sealed container as described above in the other embodiments. This somewhat simpler processing provides an unexpectedly prolonged shelf life for the fresh carrots. Although the shelf life achieved with this embodiment is not as long as that obtained when the processing includes a mild heat treatment, this embodiment is preferred to that employing mild heat treatment because it is more economical and because the prolonged shelf life that is obtained is sufficient for most commercial marketing of fresh carrots.

Another embodiment, which is also attractive because it is more economical than others described herein, requires no processing operations other than providing the fresh carrots in uniform sized pieces and then packaging them as described above in a sealed container which prevents microbial recontamination and which has a gas permeability effective to maintain the vegetable in a viable condition. Even in this simplified embodiment, the shelf life of the fresh vegetable is extended appreciably although not to the extend obtained in the other embodiments of this invention. Nonetheless this particular embodiment is economically attractive in those situations where extremely long shelf life is not required such as those commercial operations experiencing a rapid turnover of the packaged fresh carrots.

In a variation of this embodiment, after the carrots are in uniform sized pieces and before they are packaged, they are contacted for up to five minutes with cold water which optionally may be chlorinated and then the surface water is removed for the carrots. Packaging follows as in the other embodiments. The embodiments although somewhat more economical than the above embodiment which employs vacuum still provides an acceptable shelf life for most commercial marketing operations involving fresh carrots.

In both of these latter three embodiments, the carrots are ideally provided as a ready-to-eat snack food in a package which permits their being service or eaten "right out of the package." Therefore, the harvested carrots should be topped, washed and, if necessary, peeled before being provided in uniform sized pieces, all as described above. Thus, the carrots could be provided in carrot stick form or in "as grown" size where a variety is chosen which provides bite-sized whole carrots.

The following examples illustrate the practice of the invention.

## EXAMPLE I

The effect of hot water treatment on the initial aerobic microbial count of fresh carrots was evaluated.

A number of fresh carrots washed, peeled and cut into 7.62 cm x 0.95 cm x 0.95 cm (3" x 3/8" x 3/8") sticks. The carrot sticks were subjected to various hot water treatments, and then the initial aerobic microbial count of the treated carrots in terms of colony forming units (CFU) per gram was measured.

The various treatments and the results are shown in Table I below. These data indicate that the appearance and taste of fresh carrots can be substantially retained when subjecting the carrots to hot water treatment while significantly reducing the surface microbial count.

TABLE I

The Effect of Hot Water Treatment on

Initial Aerobic Microbial Count of Fresh Carrots

| Description | Initial C.F.U./gram | Initial Observation |
|---|---|---|
| Fresh Prepared Carrots No Hot Water Treatment | $3.0 \times 10^4$ | Semi-dry surface, good flavor Medium-high rigidity, light orange color |
| Agitated Water @45°C Immersion time: 1 minute | $1.0 \times 10^3$ | Medium rigidity, good flavor and texture, slightly moist surface |
| Agitated Water @45°C Immersion time: 3 minutes | $3.0 \times 10^2$ | Medium rigidity, slight flavor loss, moist surface, color not as intense as with higher temperature |
| Agitated Water @55°C Immersion time: 1 minute | <3 | Medium rigidity, good carrot flavor, slightly moist orange surface |
| Agitated Water @55°C Immersion time: 3 minutes | <3 | Medium to soft rigidity, slight cooked taste, some flavor loss, orange moist surface |

EP 0 221 489 B1

**TABLE I – continuation**

| Treatment | Count | Description |
|---|---|---|
| Agitated Water @60°C, Immersion time: 3 minutes | <3 | Soft, rubbery texture, cooked flavor, good orange color |
| Agitated Water @65°C, Immersion time: 1 minute | <3 | Medium rigidity, slight cooked flavor, orange moist surface |
| Agitated Water @65°C, Immersion time: 3 minutes | <3 | Soft, rubbery texture, cooked flavor, orange moist surface |
| Agitated Water @70°C, Immersion time: 0.50 minutes | <3 | Medium rigidity, moist orange surface, slight flavor loss |
| Agitated Water @70°C, Immersion time: 0.75 minutes | <3 | Medium to soft rigidity, moist orange surface, flavor loss more extensive |

## EXAMPLE II

The effect of hydrophilic polymer on the shelf-stability of hot water treated carrots was evaluated.

A number of carrots were prepared in stick form as in Example I and were then subjected to a series of hot water treatments and polymer coatings. After the treated carrots were stored for 13 days at about 10°C, the microbial count of each sample was measured.

A description of the various treatments and the results of the evaluation are shown in Table II below. These date indicate that a coating of a hydrophilic polymer can significantly improve the storage stability of fresh carrots which have been treated with hot water to reduce the microflora content of the carrots.

EP 0 221 489 B1

TABLE II

The Effect of Hydrophilic Polymers on

The Shelf-Stability of Hot Water Treated Fresh Carrots

| Description | Colony Forming Units per gram After Storage |
|---|---|
| Control<br>Agitated Water @55°C<br>Immersion time: 2.5 minutes | $>4.0 \times 10^{10}$ |
| Agitated Water @55°C<br>Immersion time: 2.5 minutes<br>Polymer/Usage: 0.05% Micro-<br>crystalline Cellulose | $2.2 \times 10^8$ |
| Agitated Water @55°C<br>Immersion time: 2.5 minutes·<br>Polymer/Usage: 0.1% Micro-<br>crystalline Cellulose | $1.4 \times 10^9$ |
| Agitated Water @55°C<br>Immersion time: 2.5 minutes·<br>Polymer/Usage: 0.2% Micro-<br>crystalline Cellulose | $1.0 \times 10^8$ |
| Agitated Water @55°C<br>Immersion time: 2.5 minutes·<br>Polymer/Usage: 0.2% Tapioca<br>Starch | $<2.0 \times 10^9$ |

EXAMPLE III

The effect of hot water treatment and vacuum on the storage stability of carrots was evaluated.

A number of fresh carrots were prepared in stick form as in Example I and were then subjected to various combinations of hot water treatment and vacuum. The microbial count of the treated carrots was measured immediately after the various treatments and again after prolonged storage at about 10°C which ranged from 15 to 27 days.

A description of the various treatments and the results of the evaluation are presented in Table III. These data indicate that the combination of hot water treatment and vacuum have a synergistic effect in

9

controlling microbial growth in fresh carrots.

TABLE III

| The Synergistic Affect of Hot Water Treatment and Vacuum in controlling Microbial Growth | | | |
|---|---|---|---|
| Description | Initial C.F.U./gram | Storage Time (Days) | C.F.U./gram < $10^{13}$ |
| Fresh prepared carrots | $3.7 \times 10^4$ | 15 days | $5.8 \times 10^{13}$ |
| Chlorinated Water soak 5 minutes (50-100 ppm) | $3 \times 10^3$ | 15 | $2.5 \times 10^{13}$ |
| Chlorinated Water soak 5 minutes (50-100 ppm) Vacuum 94,8KPa (28" Hg) for 5 minutes, broken with chlorinated water | $1.6 \times 10^3$ | 17 | $3.1 \times 10^{12}$ |
| Hot Water Treatment 55°C for 2 minutes | $<3.9 \times 10^2$ | 15 | $8.2 \times 10^{15}$ |
| Hot Water Treatment 55°C for 2 minutes Vacuum 94,8KPa (28" Hg) for 5 minutes broken with chlorinated water | Neg. | 27 | $8.7 \times 10^{11}$ |

EXAMPLE IV

The effect of the use of vacuum and chlorinated water on the storage stability of carrots was evaluated.

A number of fresh carrots were washed, peeled and cut into 7.62 cm x 0.95 cm x 0.95 cm (3" x 3/8" x 318") sticks. The carrots were subjected to one of three cold water treatments, spun dry and packaged in foamed polypropylene film packages. The cold water treatments evaluated were:

| | |
|---|---|
| Vacuum Conditions, Chlorinated Water | A vessel containing a body of chlorinated water (25-100 ppm) and having a platform above the water was employed. The carrots were placed on the platform and a vacuum of 94,8 KPa (28 inches Hg gauge) was pulled on the vessel. After five minutes the carrots were dumped into the body of water for one minute. The vacuum was broken. |
| Atmospheric Conditions, Chlorinated Water | The carrots were soaked in chlorinated water (25-100 ppm) for 5 minutes at atmospheric conditions. |
| Atmospheric Conditions, Chlorinated Water | The carrots were soaked in unchlorinated water for 5 minutes at atmospheric conditions. |

TABLE IV

| | Days of Acceptable Quality of Carrot Sticks | |
|---|---|---|
| | 10°C Storage | 3°C Storage |
| Vacuum Conditions, Chlorinated Water | 50 | 70 |
| Atmospheric Conditions, Chlorinated Water | 40 | 55 |
| Atmospheric Conditions, Unchlorinated Water | 25 | - |

These data indicate that the use of chlorinated water under vacuum conditions provides superior storage stability of fresh carrot sticks.

**Claims**

1. A process of maintaining a fresh root vegetable in a viable form which comprises:
    (a) peeling the surface of a fresh root vegetable,
    (b) providing the vegetable in uniform sized pieces,

EP 0 221 489 B1

(c) subjecting the vegetable to a vacuum of less than 67,7KPa (20 inches Hg absolute) for 2 to 10 min,

(d) breaking the vacuum in the presence of chlorinated water,

(e) removing surface water from the vegetable, and

(f) providing the vegetable in a sealed container effective to prevent microbial recontamination of the vegetable and having a gas permeability of from 50 to 300 ml of $O_2$/645 cm$^2$ (100 in$^2$) - $1,01.10^5$ Pa (atm)-24 h and from 200 to 800 ml of $CO_2$/645 cm$^2$ (100 in$^2$) - $1,01.10^5$ Pa (atm)-24 h and a ratio of the mass of vegetable to the container surface of 0.16 g/cm$^2$ (1g/in$^2$) to 0.93g/cm$^2$ (6g/in$^2$).

2. A process of maintaining a fresh root vegetable in viable form which comprises:

(a) peeling the surface of a fresh root vegetable,

(b) providing the vegetable in uniform sized pieces,

(c) contacting the vegetable with chlorinated cold water under atmospheric conditions for about five minutes,

(d) removing surface water from the vegetable, and

(e) providing the vegetable in a sealed container effective to prevent microbial recontamination of the vegetable and having a gas permeability of from 50 to 300 ml of $O_2$/645cm$^2$ (100 in$^2$) - $1,01.10^5$ Pa (atm.)-24 h and from 200 to 800 ml of $CO_2$/645 cm$^2$ (100 in$^2$) - $1,01.10^5$ Pa (atm.)-24 h and a ratio of the mass of the vegetable to the container surface of 0.16 g/cm$^2$ (1g/in$^2$) to 0.93 g/cm$^2$ (6g/in$^2$), with the proviso that said vegetable is not subjected to heat treatment during said process.

3. A process according to claims 1 or 2 including the following steps conducted prior to step (a) of claim 1 or step (a) of claim 2, respectively:

removing the green leafy top of the fresh root vegetable, and

effectively washing the exterior surface of the vegetable to remove soil.

4. A process according to claim 1 wherein in step (c), the vacuum is 3,4 - 67,7KPa (1 inch to 20 inches Hg absolute) and chlorinated water is present while the vegetable is subjected to vacuum.

5. A process according to claim 1 or 2 wherein the sealed container of step (f) of claim 1 or step (e) of claim 2, respectively, further has a moisture transmission rate of less than 1.5 g/645cm$^2$ (100 in$^2$)-24 h -90% R.H., 21°C(70° F).

6. A process according to claims 1 or 2 wherein the sealed container of step (f) of claim 1 or step (e) of claim 2, respectively, comprises foamed polypropylene.

7. A process according to claim 1 or 2 wherein the vegetable is carrots, turnips, rutabaga or radishes.

8. A process according to claim 7 wherein the vegetable is carrots.

9. A process of maintaining a fresh root vegetable in viable form which comprises:

(a) peeling the surface of a fresh root vegetable having endogenous microflora present therein,

(b) providing the vegetable in uniform sized pieces,

(c) subjecting the vegetable having endogenous microflora present therein to elevated temperature and time conditions effective to reduce the endogenous microflora concentration in colony forming units (CFU)/g by a factor greater than $10^2$ while maintaining the vegetable in a viable form and substantially maintaining the sensory qualities of color, taste and texture of the fresh root vegetable,

(d) rapidly cooling the heat treated vegetable to below 25°C in less than two minutes,

(e) subjecting the vegetable to a vacuum of 3,4 - 40,6 KPa (1 inch to 12 inches Hg absolute) for 2 to 10 min,

(f) breaking the vacuum in the presence of water,

(g) removing the surface water from the vegetable, and

(h) providing the vegetable in a sealed container effective to prevent microbial recontamination of the vegetable and having a gas permeability of from 50 to 300 ml of $O_2$/645 cm$^2$ (100 in$^2$) - $1,01.10^5$ Pa (atm.)-24 h and from 200 to 800 ml of $CO_2$/645cm$^2$ (100 in$^2$) - $1,01.10^5$ Pa (atm.)-24 h and a ratio of the mass of the vegetable to the container surface of 0.16 g/cm$^2$ (1g/in$^2$) to 0.93 g/cm$^2$ (6g/in$^2$).

11

EP 0 221 489 B1

**10.** A process according to claim 9 including the following steps prior to step (a):
removing the green leafy top of the fresh root vegetable, and
effectively washing the exterior surface of the vegetable to remove soil.

**11.** A process according to claim 10 wherein the vegetable is carrots, turnipS, rutabaga or radishes.

**12.** A process according to claim 9 including the following step conducted after step (g) and before step (h):
providing a coating of hydrocolloid on the rapidly cooled, heat treated fresh root vegetable, the nature and thickness of the coating being effective to substantially reduce the availability of clustered water.

**13.** A process according to claim 12 wherein the hydrocolloid is microcrystalline cellulose or modified tapioca starch and the coating is 0.05 to 1 wt% of the vegetable weight.

**14.** A process according to claim 9 wherein the vegetable is carrots.

**15.** A process according to claim 14 wherein step (c) is conducted by contacting the vegetable with water at a temperature of 45 to 55ºC for a period of time of 20 to 180 s.

**16.** A process according to claim 14 wherein step (d) is conducted by contacting the vegetable with cold water.

**17.** A process according to claim 14 wherein step (d) is conducted by subjecting the vegetable to vacuum cooling.

**18.** A process according to claim 9 wherein the vegetable is carrots and step (c) is conducted by contacting the carrots with water at a temperature of 45 to 55ºC for a period of time of 20 to 180 s, and step (d) is conducted by subjecting the carrots to vacuum cooling.

**19.** A fresh peeled carrot having a prolonged storage life of from 14 to 21 days at a temperature of 10ºC.

**Patentansprüche**

**1.** Verfahren, um ein frisches Wurzelgemüse in brauchbarer Form zu halten, welches die folgenden Stufen umfaßt:
(a) Schälen der Oberfläche eines frischen Wurzelgemüses,
(b) Zubereiten des Gemüses in gleichmäßig großen Stücken,
(c) 2- bis 10-minütiges Aussetzen des Gemüses an ein Vakuum von weniger als 67,7 kPa (20 Inches Hg absolut),
(d) Belüften in Anwesenheit chlorierten Wassers,
(e) Entfernen von Oberflächenwasser von dem Gemüse und
(f) Bereitstellen des Gemüses in einem versiegelten Behälter, der die mikrobielle Wiederverunreinigung des Gemüses effektiv verhindert und eine Gasdurchlässigkeit von 50 bis 300 ml $O_2$/645 cm$^2$ (100 in$^2$) - 1,01 x 10$^5$ Pa (atm) - 24 h und von 200 bis 800 ml $CO_2$/645 cm$^2$ (100 in$^2$) - 1,01 x 10$^5$ Pa (atm) - 24 h und ein Verhältnis der Masse des Gemüses zu der Behälteroberfläche von 0,16 g/cm$^2$ (1g/in$^2$) bis 0,93 g/cm$^2$ (6 g/in$^2$) aufweist.

**2.** Verfahren, um ein frisches Wurzelgemüse in brauchbarer Form zu halten, welches die folgenden Stufen umfaßt:
(a) Schälen der Oberfläche des frischen Wurzelgemüses,
(b) Zubereiten des Gemüses in gleichmäßig große Stücke,
(c) 5-minütiges Zusammenbringen des Gemüses mit chloriertem, kaltem Wasser unter Atmosphärenbedingungen,
(d) Entfernen von Oberflächenwasser von dem Gemüse und
(e) Bereitstellen des Gemüses in einem versiegelten Behälter, der die mikrobielle Wiederverunreinigung des Gemüses effektiv verhindert und eine Gasdurchlässigkeit von 50 bis 300 ml $O_2$/645 cm$^2$ (100 in$^2$) - 1,01 x 10$^5$ Pa (atm) - 24 h und von 200 bis 800 ml $CO_2$/645 cm$^2$ (100 in$^2$) - 1,01 x 10$^5$ Pa

EP 0 221 489 B1

(atm) - 24 h und ein Verhältnis der Masse des Gemüses zu der Behälteroberfläche von 0,16 g/cm$^2$ (1 g/in$^2$) bis 0,93 g/cm$^2$ (6 g/in$^2$) aufweist, mit der Maßgabe, daß das Gemüse während des Verfahrens keiner Wärmebehandlung ausgesetzt wird.

3.  Verfahren nach Anspruch 1 oder 2, das die folgenden Stufen vor der Stufe (a) des Anspruchs 1 bzw. der Stufe (a) des Anspruchs 2 enthält:
    Entfernen der grünen, blätterartigen Spitze des frischen Wurzelgemüses und
    wirksames Waschen der äußeren Oberfläche des Gemüses, um Erde zu entfernen.

4.  Verfahren nach Anspruch 1, worin in Stufe (c) das Vakuum 3,4 bis 67,7 kPa (1 Inch bis 20 Inches Hg absolut) beträgt und das chlorierte Wasser anwesend ist, während das Gemüse dem Vakuum ausgesetzt ist.

5.  Verfahren nach Anspruch 1 oder 2, worin der versiegelte Behälter der Stufe (f) des Anspruchs 1 bzw. der Stufe (e) des Anspruchs 2 weiterhin einen Feuchtigkeitsdurchlaßgrad von weniger als 1,5 g/645 cm$^2$ (100 in$^2$) - 24 h - 90 % relative Feuchtigkeit, 21°C (70°F) aufweist.

6.  Verfahren nach Anspruch 1 oder 2, worin der versiegelte Behälter der Stufe (f) des Anspruchs 1 bzw. der Stufe (e) des Anspruchs 2 geschäumtes Polypropylen umfaßt.

7.  Verfahren nach Anspruch 1 oder 2, worin das Gemüse Karotten, weiße Rüben, Schwedische Rübe oder Rettiche ist.

8.  Verfahren nach Anspruch 7, worin das Gemüse Karotten ist.

9.  Verfahren, um ein frisches Wurzelgemüse in brauchbarer Form zu halten, welches die folgenden Stufen umfaßt:
    (a) Schälen der Oberfläche eines frischen Wurzelgemüses mit einer endogenen Mikroflora,
    (b) Zubereiten des Gemüses in gleichmäßig große Stücke,
    (c) Aussetzen des Gemüses mit der endogenen Mikroflora an eine erhöhte Temperatur und Zeitbedingungen, die die Konzentration der endogenen Mikroflora in koloniebildenden Einheiten (CFU)/g um einen Faktor von mehr als 10$^2$ wirksam verringern, während das Gemüse in brauchbarer Form gehalten wird und die sensoriellen Qualitäten der Farbe, des Geschmacks und der Struktur des frischen Wurzelgemüses im wesentlichen erhalten bleiben,
    (d) schnelles Abkühlen des wärmebehandelten Gemüses auf unter 25°C in weniger als 2 Minuten,
    (e) 2- bis 10-minütiges Aussetzen des Gemüses an ein Vakuum von 3,4 bis 40,6 kPa (1 Inch bis 12 Inches Hg absolut),
    (f) Belüften in Anwesenheit von Wasser,
    (g) Entfernen von Oberflächenwasser von dem Gemüse und
    (h) Bereitstellen des Gemüses in einem versiegelten Behälter, der die mikrobielle Wiederverunreinigung des Gemüses effektiv verhindert und eine Gasdurchlässigkeit von 50 bis 300 ml O$_2$/645 cm$^2$ (100 in$^2$) - 1,01 x 10$^5$ Pa (atm) - 24 h und von 200 bis 800 ml CO$_2$/645 cm$^2$ (100 in$^2$) - 1,01 x 10$^5$ Pa (atm) - 24 h und ein Verhältnis der Masse des Gemüses zu der Behälteroberfläche von 0,16 g/cm$^2$ (1 g/in$^2$) zu 0,93 g/cm$^2$ (6 g/in$^2$) aufweist.

10. Verfahren nach Anspruch 9, das die folgenden Stufen vor der Stufe (a) enthält:
    Entfernen der grünen, blätterartigen Spitze von dem frischen Wurzelgemüse und
    wirksames Waschen der äußeren Oberfläche des Gemüses, um Erde zu entfernen.

11. Verfahren nach Anspruch 10, worin das Gemüse Karotten, weiße Rüben, Schwedische Rübe oder Rettiche ist.

12. Verfahren nach Anspruch 9, das die folgende, nach der Stufe (g) und vor der Stufe (h) durchgeführte Stufe enthält:
    Bereitstellen einer Hydrokolloidschicht auf dem schnell abgekühlten, wärmebehandelten frischen Wurzelgemüse, wobei die Beschaffenheit und Dicke der Schicht bewirken, daß die Verfügbarkeit von zusammengelagertem Wasser wesentlich reduziert wird.

13

**13.** Verfahren nach Anspruch 12, worin das Hydrokolloid mikrokristalline Zellulose oder modifizierte Cassawastärke ist und die Hülle 0,05 bis 1 Gew.% des Gemüsegewichts beträgt.

**14.** Verfahren nach Anspruch 9, worin das Gemüse Karotten ist.

**15.** Verfahren nach Anspruch 14, worin die Stufe (c) durch Zusammenbringen des Gemüses mit Wasser bei einer Temperatur von 45 bis 55°C für eine Zeitdauer von 20 bis 180 s durchgeführt wird.

**16.** Verfahren nach Anspruch 14, worin die Stufe (d) durch Zusammenbringen des Gemüses mit kaltem Wasser durchgeführt wird.

**17.** Verfahren nach Anspruch 14, worin die Stufe (d) durch Aussetzen des Gemüses an Vakuumkühlung durchgeführt wird.

**18.** Verfahren nach Anspruch 9, worin das Gemüse Karotten ist und die Stufe (c) durch Zusammenbringen der Karotten mit Wasser bei einer Temperatur von 45 bis 55°C für eine Zeitdauer von 20 bis 180 s durchgeführt wird und die Stufe (d) durch Aussetzen der Karotten an Vakuumkühlung durchgeführt wird.

**19.** Frische, geschälte Karotte mit verlängerter Haltbarkeitsdauer von 14 bis 21 Tagen bei einer Temperatur von 10°C.

**Revendications**

**1.** Procédé de conservation de légumes frais du genre racine sous forme viable qui consiste à :
a) Peler la surface d'un légume frais de genre racine,
b) Présenter le légume en morceaux de taille uniforme,
c) Soumettre le légume à des conditions de pression inférieures à 67,7 kPa (20 pouces de Hg absolus) pendant 2 à 10 minutes,
d) Rompre le vide en présence d'eau javellisée
e) Enlever l'eau de la surface du légume, et
f) Présenter les légumes dans un emballage scellé efficace pour éviter une recontamination microbienne des légumes et ayant une perméabilité gazeuse de 50 à 300 ml $O_2$/645 cm$^2$ (100 in$^2$), à pression atmosphérique, pendant 24 heures, et de 200 à 800 ml $CO_2$/645 cm$^2$ (100 in$^2$), à pression atmosphérique, pendant 24 heures et un rapport de la masse des légumes par rapport à la surface d'emballage de 0,16 g/cm$^2$ (1g/in$^2$) à 0,93 g/cm$^2$ (6g/in$^2$).

**2.** Procédé de conservation de légumes frais du genre racine sous forme viable:
a) Peler la surface d'un légume frais de genre racine,
b) Présenter le légume en morceaux de taille uniforme,
c) Mettre le légume au contact d'eau javellisée froide sous pression atmosphérique pendant environ cinq minutes,
d) Enlever l'eau de la surface du légume, et
e) Présenter les légumes dans un emballage scellé efficace pour éviter une recontamination microbienne des légumes et ayant une perméabilité aux gaz de 50 à 300 ml $O_2$/645 cm$^2$ (100 in$^2$), à pression atmosphérique, pendant 24 heures, et de 200 à 800 ml $CO_2$/645 cm$^2$ (100 in$^2$), à pression atmosphérique, pendant 24 heures et un rapport de la masse des légumes par rapport à la surface d'emballage de 0,16 g/cm$^2$ (1g/in$^2$) à 0,93 g/cm$^2$ (6g/in$^2$) à condition que ces légumes ne soient pas soumis à un traitement par la chaleur pendant ledit traitement.

**3.** Procédé selon l'une des revendications 1 ou 2 incluant les étapes suivantes, conduites avant l'étape (a) de la revendication 1 ou l'étape (a) de la revendication 2, respectivement :
enlever les résidus de matériel chlorophyllien de la racine fraîche et
laver l'extérieur du légume pour enlever tout résidu de terre

**4.** Procédé selon la revendication 1 dans lequel à l'étape (c), le vide est de 3,4-67,7 kPa (1 pouce à 20 pouces Hg absolus) et de l'eau javellisée est présente pendant que le végétal est soumis au vide.

5. Procédé selon la revendication 1 ou 2 dans lequel l'emballage scellé de l'étape (f) de la revendication 1 ou de l'étape (e) de la revendication 2, respectivement, a de plus un taux de transmission de l'humidité de moins de 1,5 g/645 cm$^2$ (100 in$^2$), pendant 24h à 90% HR et 21°C (70°F).

6. Procédé selon la revendication 1 ou 2 dans lequel l'emballage scellé de l'étape (f) de la revendication 1 ou de l'étape (e) de la revendication 2, respectivement, comprend de la mousse de polypropylène.

7. Un procédé selon la revendication 1 ou 2 dans lequel le légume est une carotte, un navet, un rutabaga ou un radis.

8. Un procédé selon la revendication 7 dans lequel le légume est une carotte.

9. Procédé de conservation de légumes frais du genre racine sous forme viable qui comprend :
   a) Peler la surface d'un légume frais de genre racine possédant une flore microbienne endogène interne,
   b) Présenter le légume en morceaux de taille uniforme,
   c) Soumettre le légume possédant une flore microbienne interne à une température élevée pendant un temps suffisant pour diminuer la concentration des unités coloniales (CFU) de flore microbienne endogène/g d'un facteur supérieur à 10$^2$ tout en maintenant les légumes en condition de vie, et en conservant les qualités sensorielles de couleur, de goût et de texture des racines fraîches,
   d) Refroidir rapidement les légumes traités par la chaleur jusqu'à moins de 25 °C et en moins de 2 minutes environ,
   e) Appliquer un vide de 3,4 à 67,7 kPa (1 inch à 12 inch, Hg absolus) aux légumes pendant 2 à 10 minutes,
   f) Rompre le vide en présence d'eau,
   g) Enlever l'eau de la surface du légume, et
   h) Présenter les légumes dans un emballage scellé efficace pour éviter une recontamination microbienne des légumes et ayant une perméabilité aux gaz de 50 à 300 ml O$_2$/645 cm$^2$ (100 in$^2$), à 1,01 x 10$^5$ Pa (pression atmosphérique), pendant 24 heures, et de 200 à 800 ml CO$_2$/645 cm$^2$ (100 in$^2$), à 1,01 x 10$^5$ Pa (pression atmosphérique), pendant 24 heures et un rapport de la masse des légumes par rapport à la surface d'emballage de 0,16 g/cm$^2$ (1g/in$^2$) à 0,93 g/cm$^2$ (6g/in$^2$).

10. Un procédé selon la revendication 9 incluant les étapes suivantes précédant l'étape (a):
    enlever les résidus de matériel chlorophyllien de la racine fraîche et
    laver l'extérieur du légume pour enlever tout résidu de terre

11. Un procédé selon la revendication 10 dans laquelle le légume est une carotte, un navet, un rutabaga ou un radis.

12. Un procédé selon la revendication 9 incluant l'étape suivante réalisée après l'étape g) et avant l'étape h):
    conférer un enrobage de type hydrocolloïde au légume de genre racine rapidement refroidi et traité à la chaleur, pour réduire notablement la disponibilité en "eau agglomérée", en jouant sur la nature et l'épaisseur de l'enrobage.

13. Un procédé selon la revendication 12 dans lequel l'hydrocolloïde est une cellulose microcristalline ou une farine de tapioca modifiée et où l'enrobage représente 0,05 à 1 % du poids du légume.

14. Un procédé selon la revendication 9 dans lequel le légume est une carotte.

15. Un procédé selon la revendication 14 dans lequel l'étape c) est conduite en mettant en contact le légume avec de l'eau à une température entre 45 et 55 °C pendant 20 à 180 secondes.

16. Un procédé selon la revendication 14 dans lequel l'étape d) est conduite en mettant en contact le légume avec de l'eau froide.

17. Un procédé selon la revendication 14 dans lequel l'étape d) est conduite en soumettant le légume à un refroidissement sous vide.

**18.** Un procédé selon la revendication 9 dans lequel le légume est une carotte et l'étape c) est est conduite en mettant en contact les carottes avec de l'eau chauffée entre 45 et 55 °C pendant 20 à 180 secondes et l'étape d) est conduite par traitement des carottes par refroidissement sous vide.

**19.** Une carotte fraîche épluchée ayant une durée de conservation de 14 à 21 jours à une température de 10°C.